# EUROPÄISCHE PATENTSCHRIFT

(11) **EP 1 200 286 B1**
(45) Veröffentlichungstag und Bekanntmachung des Hinweises auf die Patenterteilung: **05.09.2012**
(21) Anmeldenummer: 00949118.4
(22) Anmeldetag: 15.06.2000
(51) Int. Cl.: B60Q 1/14

(54) **LICHTEMPFINDLICHE SENSOREINHEIT, INSBESONDERE ZUM AUTOMATISCHEN SCHALTEN VON BELEUCHTUNGSEINRICHTUNGEN**
PHOTOSENSITIVE DETECTION UNIT, IN PARTICULAR FOR AUTOMATIC CONNECTION OF LIGHTING EQUIPMENT
UNITE DE DETECTEUR PHOTOSENSIBLE, EN PARTICULIER POUR LA CONNEXION AUTOMATIQUE DE DISPOSITIFS D'ECLAIRAGE

(30) Priorität: 17.07.1999 DE 19933642
(43) Veröffentlichungstag der Anmeldung: 02.05.2002
(73) Patentinhaber: ROBERT BOSCH GMBH, 70442 Stuttgart (DE)
(72) Erfinder: HOG, Norbert, D-77815 Buehl (DE); HODAPP, Bruno, D-77855 Achern-Oensbach (DE); PIENTKA, Rainer, D-77871 Renchen (DE); MEIER, Hans, D-77833 Ottersweier (DE); BLITZKE, Henry, D-77815 Buehl (DE); BURKART, Manfred, D-76473 Iffezheim (DE)
(86) Internationale Anmeldenummer: PCT/DE2000/001989
(87) Internationale Veröffentlichungsnummer: WO 2001/005625

(56) Entgegenhaltungen:
- EP-A- 0 857 611
- DE-A- 19 704 818
- DE-A- 19 839 273

## Beschreibung

### Stand der Technik

Die Erfindung geht aus von einer lichtempfindlichen Sensoreinheit, insbesondere zum automatischen Schalten von Beleuchtungseinrichtungen bei Fahrzeugen, nach Gattung des Oberbegriffes des Anspruchs 1, wie von der Patentschrift DE 19839273A1 offenbart.

Eine solche Sensoreinheit ist außerdem durch die DE 195 23 262.3 bekannt, die einen Globalsensor und einen Richtungssensor umfaßt, durch welche die Lichtverhältnisse außerhalb des Fahrzeugs erfaßt werden. Die Sensoreinheit ist mit der Auswerteeinrichtung verbunden, in der aus den Signalen der Sensoreinheit ermittelt wird, ob bei den aktuell vorliegenden Lichtverhältnissen in der Umgebung des Fahrzeugs eine Änderung des Schaltzustandes der Beleuchtungseinrichtungen erforderlich ist. Diese bekannte Sensoreinheit läßt zwar eine automatische Schaltung der Beleuchtungseinrichtungen zu, jedoch umfaßt sie durch die Global- und Richtungssensorik relativ viele Teile, was erhebliche Kosten sowie eine aufwendige Justage verursacht.

### Vorteile der Erfindung

Die erfindungsgemäße Einrichtung mit den Merkmalen des Anspruchs 1 hat den Vorteil, daß durch die Integration von Global- und Richtungssensorik eine einfache, kompakte, robuste, leicht zu montierende und praktisch justagefreie Sensoreinheit zur Verfügung steht. Dazu umfaßt die Einrichtung nur eine minimale Anzahl von Bauteilen was eine einfache und kostengünstige Produktion bei erweiterter Funktionalität ermöglicht. Da auf Windschutzscheiben von Kraftfahrzeugen die Größe sichtbehindernder Komponenten gering gehalten werden soll, erweisen sich die geringen Abmessungen welche durch die Integration von Global- und Richtungssensorik möglich sind, als weiterer großer Vorteil.

Durch die in den Unteransprüchen aufgeführten Merkmale sind vorteilhafte Weiterbildungen der Sensoreinheit nach dem Hauptanspruch möglich

Dadurch, daß mindestens drei Sensoren Licht aus vorbestimmten Richtungen detektieren, wird ein weiter Bereich vor dem Fahrzeug erfaßt. Wenn mindestens ein Sensor in Fahrtrichtung sowie die beiden weiteren Sensoren beidseitig um einen Winkel α aus der Fahrtrichtung herausgeschwenkten Winkel angeordnet sind ergibt sich vor dem Fahrzeug ein breiter Erfassungskegel, so daß auch Tunneleinfahrten, die noch nicht in Fahrtrichtung liegen, erfaßt werden und die Beleuchtungseinrichtung entsprechend gesteuert werden kann.

Weisen die Richtungssensoren, linsenartige Elemente auf, welche auch ineinander übergehen können, kann der Erfassungskegel individuell auf die Wünsche des Fahrzeugherstellers abgestimmt werden.

Durch die Integration des Lichtleitkörpers der Sensoreinheit in einen Lichtleitkörper einer Regensensoreinrichtung können weitere Bauteile eingespart werden und die Anzahl der sichtbehindernden Komponenten auf der Windschutzscheibe noch weiter reduziert werden, insbesondere dann wenn der Lichtleitkörper in einem mehrkomponentigen Spritzgußverfahren zusammen mit dem Lichtleitkörper des Regensensors und dem Koppelmedium hergestellt ist.

### Zeichnung

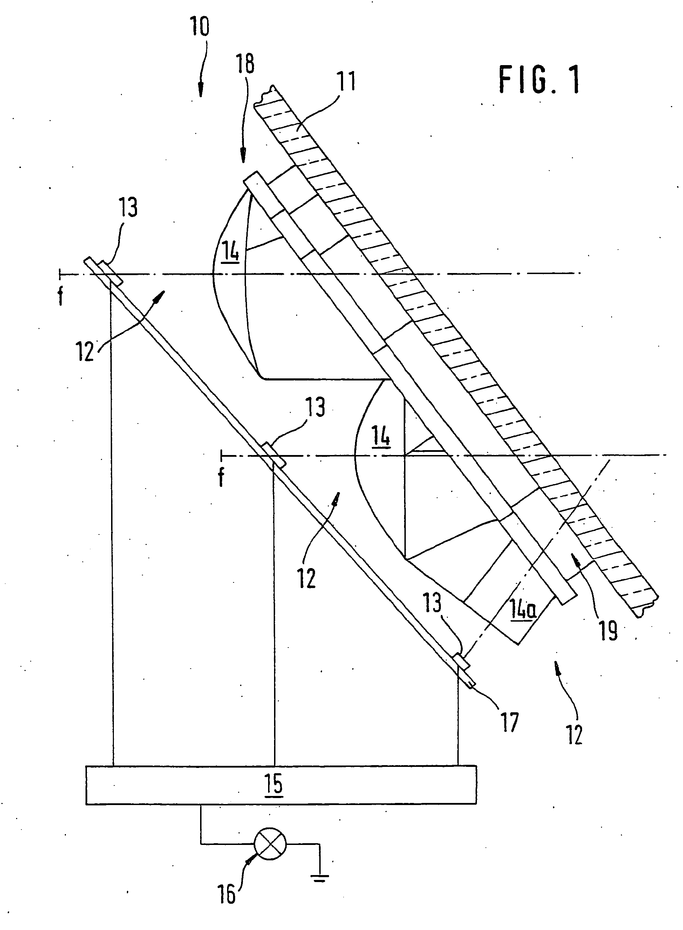

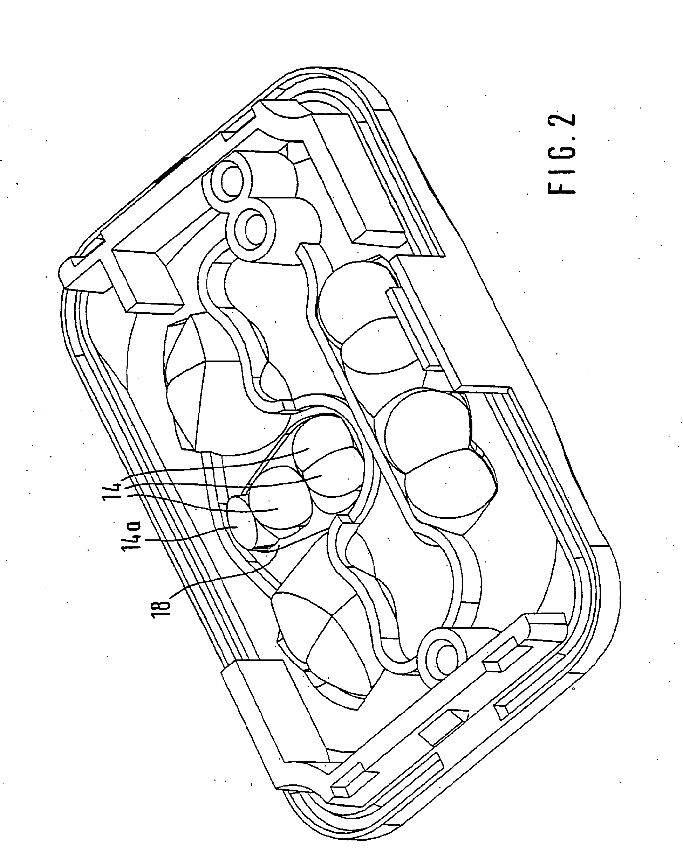

Ein Ausführungsbeispiel der Erfindung ist in den Figuren 1 und 2 dargestellt und in der nachfolgenden Beschreibung näher erläutert. Es zeigt Fig. 1 einen Schnitt durch eine erfindungsgemäße Sensoreinheit sowie
Fig. 2 eine Darstellung der Sensoreinheit integriert in einen Lichtleitkörper eines Regensensors in perspektivischer Darstellung.

### Beschreibung des Ausführungsbeispiels

Fig. 1 zeigt eine erfindungsgemäße Sensoreinheit 10, welche auf einer Scheibe 11, insbesondere einer Windschutzscheibe eines Kraftfahrzeuges angebracht ist. Die Sensoreinheit 10 besteht aus mehreren Sensoren 12, wobei jeder Sensor 12 ein Sensorelement 13 und ein Lichtleitelement 14, 14a umfaßt. Hier jedoch benutzen zwei Lichtleitelemente 14 gemeinsam ein Sensorelement 13, so daß sich drei lichtempfindliche Sensorelemente 13 mit vier Lichtleitelementen 14 und 14a ergeben. Der Lichtleitkörper, auf dem die Lichtleitelemente 14, 14a aufgebracht sind besteht aus einer zumindest teilweise lichtdurchlässigen Platte die zylindrische Ausformungen aufweist, welche mit linsenförmigen Rundungen abgeschlossen sind. Diese zylindrischen Ausformungen bilden mit den linsenförmigen Rundungen jeweils ein Lichtleitelement 14,14a. Tritt paralleles Licht entlang der Mittelachse der zylindrischen Ausformungen durch die linsenförmigen Rundungen, ergibt sich ein Brennpunkt f der eine Brennweite des Lichtleitelements 14,14a charakterisiert.

Die Sensorelemente 13 sind jeweils zwischen den Brennpunkten f der Lichtleitelemente 14 sowie den Lichtleitelementen 14 selbst angeordnet. Dadurch ergeben sich in Fahrtrichtung nach vorne gerichtete Lichterfassungskegel welche eine Detektion in vorbestimmten Richtungen zulassen. Über den Abstand zwischen den Brennpunkten f des jeweils zugehörigen Lichtleitelements 14 und den lichtempfindlichen Sensorelementen 13 kann der Öffnungswinkel des Lichterfassungskegels eingestellt werden.

Eine Auswerteeinrichtung 15 steuert das Schalten einer Beleuchtungseinrichtung 16 in Abhängigkeit der Signale von den Sensorelementen 13. Die Sensorelemente 13 können gemeinsam auf einer Platine 17 aufgebracht sein und sind vorzugsweise so ausgelegt, daß sie Tageslicht und Kunstlicht unterscheiden können, um ein Abschalten durch die Kunstlichtbeleuchtung, beispielsweise in einem Tunnel, zu verhindern. Dies kann durch geeignete Wahl des Sensitivitätsbereichs der Sensorelemente 13 bewirkt werden. Es ist auch möglich den Sensitivitätsbereich so zu wählen, daß bestimmte Spektralbereiche oder charakteristische Linien, beispielsweise von Gasentladungslampen, erkannt werden und so eine Steuerung von Fern- und Abblendlicht bei einem Kraftfahrzeug ermöglicht wird.

Neben dieser Richtungssensorik ist mindestens ein Lichtleitelement 14a nicht notwendigerweise in Fahrtrichtung nach vorne ausgerichtet. Der Lichterfassungskegel dieses mindestens einen Lichtleitelements 14a weist einen sehr großen Öffnungswinkel auf und erfaßt die globalen Lichtverhältnisse außerhalb des Fahrzeugs.

Sämtliche Lichtleitelemente 14,14a, insbesondere die Sensoren die der Richtungssensorik und der Globalsensorik, sind zu einem Lichtleitkörper 18 einstückig verbunden. Dieser Lichtleitkörper 18 kann beispielsweise als Spritzgußteil aus einem klarsichtigen oder UV durchlässigen Kunststoff hergestellt sein. Ebenso ist es möglich den Lichtleitkörper 18 aus einem gefärbten oder beschichteten Kunststoff herzustellen, welcher eine eventuell gewünschte Filterwirkung zur Beeinflussung des Sensitivitätsbereichs des Sensors beinhaltet. Dieser Lichtleitkörper wird über ein Koppelmedium 19, beispielsweise ein Silikonkissen, auf die Scheibe gedrückt. Das Koppelmedium 19 verhindert Lufteinschlüsse zwischen Scheibe 11 und Lichtleitkörper 18, die eine unerwünschte Streuung verursachen würden. Es ist ferner möglich das Koppelmedium 19 in einem Mehrkomponenten-Spritzgußverfahren direkt bei der Herstellung des Lichtleitkörpers 18 auf demselben aufzubringen.

## Patentansprüche

1. Lichtempfindliche Sensoreinheit (10), insbesondere zum automatischen Schalten von Beleuchtungseinrichtungen, vorzugsweise von Kraftfahrzeugen, welche mindestens zwei lichtempfindliche Sensoren (12) umfaßt, denen Lichtleitelemente (14, 14a) zugeordnet sind, die eine vorbestimmbare Empfangscharakteristik aufweisen, wobei mindestens ein erster Sensor (12) die globalen Lichtverhältnisse und mindestens ein zweiter Sensor (12) die Lichtverhältnisse in vorbestimmten Richtungen detektieren und die den Sensoren (12) zugeordneten Lichtleitelemente (14, 14a) zu einem Lichtleitkörper (18) einstückig verbunden sind, wobei die Lichtleitelemente (14, 14a) ineinander übergehen und **dadurch gekennzeichnet, daß** zwei Sensoren (12) beidseitig je einen Winkel α mit einer in Fahrtrichtung weisenden Geraden einschließen und ein gemeinsames lichtempfindliches Sensorelement (13) aufweisen.

2. Lichtempfindliche Sensoreinheit (10) nach dem Oberbegriff des Anspruchs 1, **dadurch gekennzeichnet, daß** der Lichtleitkörper (18) eine Platte umfaßt, die zylindrische Ausformungen aufweist, die die Lichtleitelemente (14, 14a) bilden.

3. Lichtempfindliche Sensoreinheit (10) nach dem Oberbegriff des Anspruchs 1, **dadurch gekennzeichnet, daß** der Lichtleitkörper (18) aus einem gefärbten oder beschichteten Kunststoff hergestellt ist.

4. Lichtempfindliche Sensoreinheit (10) nach dem Oberbegriff des Anspruchs 1, **dadurch gekennzeichnet, daß** der Lichtleitkörper (18) in einen Lichtleitkörper einer Regensensoreinrichtung integriert ist.

5. Sensoreinheit nach einem der vorhergehenden Ansprüche, **dadurch gekennzeichnet, daß** mindestens drei Sensoren (12) Licht aus vorbestimmten Richtungen detektieren.

6. Sensoreinheit nach einem der vorhergehenden Ansprüche, **dadurch gekennzeichnet, daß** mindestens ein Sensor (12) mit vorbestimmter Richtung in Fahrtrichtung eines Fahrzeugs ausgerichtet ist

7. Sensoreinheit nach einem der vorhergehenden Ansprüche, **dadurch gekennzeichnet, daß** mindestens ein Sensor (12), der die Lichtverhältnisse in vorbestimmter Richtung detektiert, mit einer Geraden in Fahrtrichtung eines Fahrzeuges, einen Winkel α einschließt.

8. Sensoreinheit nach einem der vorhergehenden Ansprüche, **dadurch gekennzeichnet, daß** die Lichtleitelemente (14,14a) zylindrische Ausformungen aufweisen.

9. Sensoreinheit nach einem der vorhergehenden Ansprüche, **dadurch gekennzeichnet, daß** die Lichterfassungskegel der Lichtleitelemente (14,14a) überlappt sind.

10. Sensoreinheit nach einem der vorhergehenden Ansprüche, **dadurch gekennzeichnet, daß** die Sensorelemente (13) als Tages- und Kunstlicht unterscheidende Sensorelemente (13) ausgebildet sind.

11. Sensoreinheit nach einem der vorhergehenden Ansprüche, **dadurch gekennzeichnet, daß** die Auswerteeinrichtung (15) als Tages- und Kunstlicht unterscheidende Auswerteeinrichtung (15) ausgebildet ist.

12. Sensoreinheit (10) nach Anspruch 4, **dadurch gekennzeichnet, daß** der Lichtleitkörper (18) zusammen mit dem Lichtleitkörper der Regensensoreinrichtung in einem Mehrkomponenten-Spritzgußverfahren hergestellt ist.

## Claims

1. Light-sensitive sensor unit (10), in particular for automatic switching of lighting devices, preferably of motor vehicles, which comprises at least two light-sensitive sensors (12) which are assigned light-guiding elements (14, 14a) which have a predeterminable reception characteristic, at least a first sensor (12) detecting the global lighting conditions and at least a second sensor (12) detecting the lighting conditions in predetermined directions, and the light-guiding elements (14, 14a) assigned to the sensors (12) being connected in one piece to form a light-guiding body (18), the light-guiding elements (14, 14a) merging into one another, **characterized in that** two sensors (12) enclose an angle α in each case on both sides with a straight line pointing in the driving direction, and have a common light-sensitive sensor element (13).

2. Light-sensitive sensor unit (10) according to the preamble of Claim 1, **characterized in that** the light-guiding body (18) comprises a plate which has cylindrical projections which from the light-guiding elements (14, 14a).

3. Light-sensitive sensor unit (10) according to the preamble of Claim 1, **characterized in that** the light-guiding body (18) is produced from a coloured or coated plastic.

4. Light-sensitive sensor unit (10) according to the preamble of Claim 1, **characterized in that** the light-guiding body (18) is integrated in a light-guiding body of a rain sensor device.

5. Sensor unit according to one of the preceding claims, **characterized in that** at least three sensors (12) detect light from predetermined directions.

6. Sensor unit according to one of the preceding claims, **characterized in that** at least one sensor (12) with a predetermined direction is aligned in the driving direction of a vehicle.

7. Sensor unit according to one of the preceding claims, **characterized in that** at least one sensor (12), which detects the lighting conditions in a predetermined direction, encloses an angle α with a straight line in the driving direction of a vehicle.

8. Sensor unit according to one of the preceding claims, **characterized in that** the light-guiding elements (14, 14a) have cylindrical projections.

9. Sensor unit according to one of the preceding claims, **characterized in that** the light-detecting cones of the light-guiding elements (14, 14a) are overlapped.

10. Sensor unit according to one of the preceding claims, **characterized in that** the sensor elements (13) are designed as sensor elements (13) which distinguish daylight and artificial light.

11. Sensor unit according to one of the preceding claims, **characterized in that** the evaluation device (15) is designed as an evaluation device (15) which distinguishes daylight and artificial light.

12. Sensor unit (10) according to Claim 4, **characterized in that** the light-guiding body (18) is produced together with the light-guiding body of the rain sensor device using a multicomponent injection moulding method.

## Revendications

1. Unité de détection (10) sensible à la lumière, notamment pour la commutation automatique d'équipements d'éclairage, de préférence de véhicules automobiles, laquelle comprend au moins deux capteurs sensibles à la lumière (12) auxquels sont associés des éléments à fibre optique (14, 14a) qui présentent une caractéristique de réception pouvant être prédéfinie, au moins un premier capteur (12) détectant les conditions de luminosité globales et au moins un deuxième capteur (12) détectant les conditions de luminosité dans des directions prédéfinies et les éléments à fibre optique (14, 14a) associés aux capteurs (12) étant reliés d'une seule pièce avec un corps de fibre optique (18), les éléments à fibre optique (14, 14a) se confondant l'un dans l'autre, et **caractérisée en ce que** deux capteurs (12) forment des deux côtés à chaque fois un angle α avec une droite dirigée dans le sens du déplacement et présentent un élément de détection sensible à la lumière commun (13).

2. Unité de détection (10) sensible à la lumière selon le préambule de la revendication 1, **caractérisée en ce que** le corps de fibre optique (18) comprend une plaque qui présente des déformations cylindriques, lesquelles forment les éléments à fibre optique (14, 14a).

3. Unité de détection (10) sensible à la lumière selon le préambule de la revendication 1, **caractérisée en ce que** le corps de fibre optique (18) est fabriqué en une matière plastique colorée ou enduite.

4. Unité de détection (10) sensible à la lumière selon le préambule de la revendication 1, **caractérisée en ce que** le corps de fibre optique (18) est intégré dans un corps de fibre optique d'un dispositif de détection de pluie.

5. Unité de détection selon l'une des revendications précédentes, **caractérisée en ce qu'**au moins trois capteurs (12) détectent la lumière provenant de directions prédéfinies.

6. Unité de détection selon l'une des revendications précédentes, **caractérisée en ce qu'**au moins un capteur (12) est orienté avec une direction prédéfinie dans le sens de déplacement d'un véhicule.

7. Unité de détection selon l'une des revendications précédentes, **caractérisée en ce qu'**au moins un capteur (12), lequel détecte les conditions de luminosité dans une direction prédéfinie, forme un angle α avec une droite dans le sens de déplacement d'un véhicule.

8. Unité de détection selon l'une des revendications précédentes, **caractérisée en ce que** les éléments à fibre optique (14, 14a) présentent des déformations cylindriques.

9. Unité de détection selon l'une des revendications précédentes, **caractérisée en ce que** les cônes de détection de la lumière des éléments à fibre optique (14, 14a) sont superposés.

10. Unité de détection selon l'une des revendications précédentes, **caractérisée en ce que** les éléments de détection (13) sont réalisés sous la forme d'éléments de détection (13) faisant la différence entre la lumière du jour et la lumière artificielle.

11. Unité de détection selon l'une des revendications précédentes, **caractérisée en ce que** le dispositif d'interprétation (15) est réalisé sous la forme d'un dispositif d'interprétation (15) faisant la différence entre la lumière du jour et la lumière artificielle.

12. Unité de détection (10) selon la revendication 4, **caractérisée en ce que** le corps de fibre optique (18) est fabriqué conjointement avec le corps de fibre optique du dispositif de détection de pluie dans un procédé de moulage par injection de plusieurs composants.
